# EUROPEAN PATENT SPECIFICATION

(11) **EP 1 014 674 B1**
(45) Date of publication and mention of the grant of the patent: **30.08.2006**
(21) Application number: 99310155.9
(22) Date of filing: 16.12.1999
(51) Int. Cl.: H04M 19/04

(54) **A method and a telecommunication apparatus for creating an alerting signal**
Verfahren und Telekommunikationsvorrichtung zur anrufsignalerzeugung
Methode et appareil de télécommunications pour la generation d'un signal d'alerte

(30) Priority: 23.12.1998 GB 9828540
(43) Date of publication of application: 28.06.2000
(73) Proprietor: Nokia Corporation, 02150 Espoo (FI)
(72) Inventor: Heie, Anders, San Diego, CA 92122 (US); Sorensen, Thomas, 2200 Copenhagen N (DE)
(74) Representative: Read, Matthew Charles

(56) References cited:
- EP-A- 0 795 845
- EP-A- 0 933 917
- GB-A- 2 326 056
- US-A- 5 481 599
- US-A- 5 687 227

## Description

The present invention relates to a telecommunication apparatus having an alerting system, and a method for creating an alerting signal in a telecommunication apparatus according to the preamble of claim 1 and 9, respectively.

The use of telecommunication apparatus is very frequent today. The telecommunication apparatus may for example be a cellular phone, a pager, and/or a similar device. Therefore, it is very common to hear an alerting signal, i.e. a ringing signal, in those parts of the world which supports a network for a telecommunication apparatus. For example, in Europe there is GSM, which is one example of a very common system used in networks. Since Europe has a lot of users, who receive a lot of calls, it becomes more and more difficult to distinguish the different apparatus, because many users uses/have the same alerting signal. This has become a huge problem. Because, when an apparatus is ringing, and there are many users around having the same alerting signal activated, these users will then most likely grab after their apparatus to discover that it was someone else's apparatus ringing. In particular, if a user is not expecting a call and has his/her hands occupied, it might become very annoying when an apparatus rings, and the call was not even to him/her. Also, if somebody discovers a new alerting signal, which might be appreciated by other users, there is a possibility that it becomes so popular that it ends up with the same problem.

Furthermore, there is mostly no or small opportunity to alter the audible ringing or alerting signal so that, for example, a telephone generates a distinctive, audible alerting signal that is personalized to an individual user or group of users. Various telephone networks have, in some cases, a possibility to download alerting signals from a server provided by different service providers. However, in most cases the pattern of the audible ringing signal is usually limited to what has been placed on the server. There, is also some telephones having a feature, which allows the individual user to compose his/her own alerting signal. However, this feature is mostly very difficult to use for composing a tune, since the user usually has to define every note in the tune manually. By manually means that user may e.g. use the keypad on the phone to compose the tune.

US-A-5,687,227 discloses an example of customizing an alerting signal in a personalized way. This is done by receiving sound segments by a microphone, converted into digital signals by an analog/digital converter (ADC), and processed and stored in a memory, as an alerting signal, under direction of a digital signal processor (DSP). Thereafter, it should be possible to audibly reproduce the alerting signal, upon reception of an incoming call. However, since the sound segments are processed by the DSP in a conventional manner, and stored in the memory, it may require a lot of space in the memory. Also, the memory capacity in a telephone is very restricted, which means that there will only be space for one or a few alerting signals, depending on the format and the length of the received sound segment.

Also, UK-A-2,326,056 discloses an example of a ringing-tone control device for a telephone set, which is able to divide an inputted audio signal into different sub-bands, determining the strongest signals of the sub-bands, and converting the signals to a ringing-tone based on the inputted audio signal. However, this may cause problems due to background noise, when the user would like to input a sound sequence, since the control device chooses the strongest signal of the sub-bands. This means that if the background noise has a larger amplitude than the intended sound sequence, the control device might choose the background noise instead. Also, the control device includes an array of band-pass filters, which divides the inputted audio signal in to different sub-bands. This means that control device must be provided with additional hardware in the telephone set, which is always difficult to minimize.

It is therefore an object of the present invention to provide a way to create an alerting signal for a telecommunication apparatus, by inputting an audio signal to create the alerting signal to be generated by a transducer, wherein the alerting signal is not affected by background noise, the telecommunication apparatus is able to use its existing hardware, and wherein the implementation does not require additional hardware.

Another object of the present invention, is to provide a way for creating an alerting signal, which is personalized and minimize the size of the signal when stored in memory of the phone.

These objects are achieved in accordance with the present invention by a telecommunication apparatus having an alerting system, and a method for creating an alerting signal for a telecommunication apparatus according to claim 1 and 9, respectively.

A particular advantage with the present invention is that the user may choose any sound he/she likes, e.g. by using a microphone which is usually built-in the apparatus, and make a record of an audio signal, for example by whistling a tone. Thereafter, the signal is converted into an alerting signal, representing the most relevant frequencies from the audio signal. Thus, the alerting signal is not necessarily identical with the sound as was recorded, i.e. the alerting signal is saved in a manner allowing the user to save several alerting signals and minimizing the size of the alerting signal. This means that the alerting signal will not require the same amount of memory, as otherwise would be required if saving every frequency of the audio signal, which is possible to record.

Further advantages according to the present invention will be apparent from the dependent claims.

The invention will be described in greater detail in the following by way of example only and with reference to the attached drawings, in which
Fig. 1 schematically illustrates a preferred embodiment of a hand portable phone according to the present invention,
Fig. 2 schematically shows the essential parts of a telephone for communicating with a cellular or cordless network,
Fig. 3 schematically shows a preferred embodiment of an alerting system in a telecommunication apparatus, in accordance with the present invention,
Fig. 4 shows a flowchart for creating an alerting signal in a phone, in accordance with the present invention, and
Fig. 5a, 5b and 5c shows an example of a user interface in a phone according to the present invention.

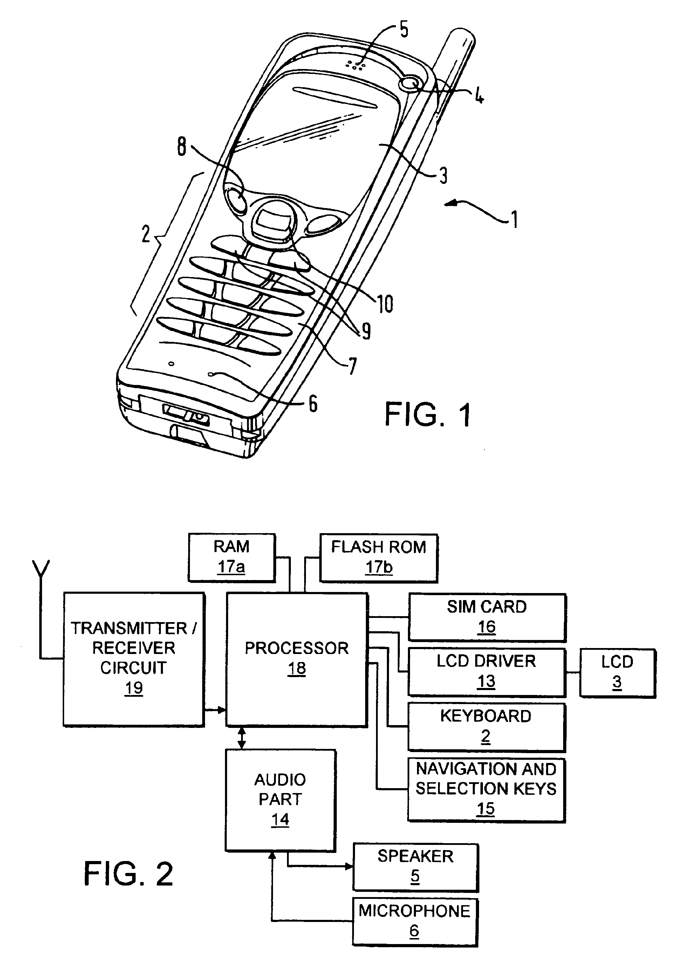

Fig. 1 shows a preferred embodiment of a telecommunication apparatus, hereafter also referred to as a phone, according to the present invention. The phone, which is generally designated by 1, comprises a user interface having a keypad 2, a display 3, an on/off button 4, a speaker 5, and a microphone 6. The phone 1 according to the preferred embodiment is adapted for communication via a wireless telecommunication network, e.g. a cellular network. However, the phone could also have been designed for a cordless network. The keypad 2 has a first group 7 of keys as alphanumeric keys, by means of which the user can enter a telephone number, write a text message (SMS), write a name (associated with the phone number), etc. Each of the twelve alphanumeric keys 7 is provided with a figure "0-9" or a sign "#" or "*", respectively. In alpha mode each key is associated with a number of letters and special signs used in text editing.

The keypad 2 additionally comprises two soft keys 8, two call handling keys 9, and a navigation key 10.

The two soft keys 8 have a functionality corresponding to what is known from the phones Nokia 2110™, Nokia 8110™ and Nokia 3810™. The functionality of the soft key depends on the state of the phone and the navigation in the menu by using a navigation key. The present functionality of the soft keys 8 is shown in separate fields in the display 3 just above the keys 8.

The two call handling keys 9 according to the preferred embodiment are used for establishing a call or a conference call, terminating a call or rejecting an incoming call.

The navigation key 10 is an up/down key and is placed centrally on the front surface of the phone between the display 3 and the group of alphanumeric keys 7. Hereby the user will be able to control this key by simply pressing the up/down key using his/her thumb. Since many experienced phone users are used to one-hand control, it is a very good solution to place an input key, requiring precise motor movements. Thus, the user may place the phone in the hand between the finger tips and the palm of the hand. Hereby, the thumb is free for inputting information.

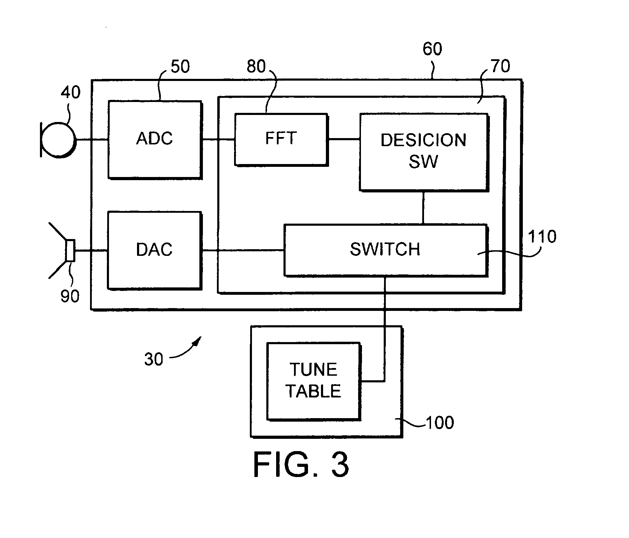

Fig. 2 schematically shows the most essential parts of a preferred embodiment of the phone. These parts being essential to understand the invention. The preferred embodiment of the phone of the invention is adapted for use in connection with a GSM network, but, of course, the invention may also be applied in connection with other phone networks, such as other kinds of cellular networks and various forms of cordless phone systems or in dual band phones accessing sets of these systems/networks. The microphone 6 records the user's speech, and the analogue signals formed thereby are A/D converted in an A/D converter, which can be done in an audio part 14, see also Fig. 3. The speech is further encoded in the audio part 14. The encoded speech signal is transferred to controller means 18, denoted as "Processor" in Fig. 2, which may support software in the phone. The controller means 18 also forms the interface to the peripheral units of the apparatus, including a RAM memory 17a and a Flash ROM memory 17b, a SIM card 16, the display 3 and the keypad 2 (as well as data, power supply, etc.). The controller means 18 communicates with the transmitter/receiver circuit 19. The audio part 14 speech-decodes the signal, which is transferred from the controller 18 to the earpiece 5 via a D/A converter (see Fig. 3).

The controller means 18 is connected to the user interface. Thus, it is the controller means 18 which may monitor the activity in the phone and control the display 3 in response thereto.

Therefore, the controller means 18 can detect the occurrence of a state change event and changes the state of the phone and thus the display text. A state change event may be caused by the user when he activates the keypad including the navigation key 10, and these type of events are called entry events or user events. However, the network communicating with the phone may also cause a state change event. This type of event and other events beyond the user's control are called non-user events. Non-user events comprise status change during call set-up, change in battery voltage, change in antenna conditions, message on reception of SMS, etc.

### The alerting system

Fig. 3 schematically shows an embodiment of an alerting system 30 according to the present invention, which in this example forms a part of the audio part 14 shown in Fig. 2. Thus, the alerting system 30 is a part of the phone shown in Fig. 1 and 2. The alerting system 30 is provided with input means 40, which is illustrated as a microphone. However, it is also possible that the input means 40 may be provided with connecting means (not shown), arranged to receive an electrical connector (not shown) from an apparatus having an audio output. For example, it can be possible to connect a compact disc (CD) player, tape recorder, radio, or other audio equipment which produces an audible signal, to the input means 40, in order to give an alternative input of an audio signal into the phone.

The input means 40 can be connected to an analogue/digital converter (ADC) 50, which converts an analogue audio signal inputted in the input means to a digital signal. The audio signal having a length of time comprising different frequencies of various strength. Naturally, the audio signal has an amplitude, which may vary under the length of time. This means that the strength of the frequencies is a factor, which is dependant on the amplitude. Another factor might be the phase of the audio signal. However, in this embodiment it is the amplitude which is representing the strength. The strength is discussed in more detail below.

As an alternative to the analogue audio signal, it may also be possible that the input means 40 receives a digital audio signal by the connecting means (not shown). This can be done by e.g. using a digital output from a CD player, digital audio tape (DAT) recorder, or a digital radio. The advantages by excluding the ADC are that it saves components, and the digital audio signal have in most cases a very good resolution from the digital output from these types of devices as mentioned.

The alerting system in Fig. 3 further comprises a signal processing unit (SPU) 60, which is operatively associated with the input means 40. Depending on the format of the audio signal, the SPU 60 can be connected directly to the input means (not shown), or an ADC 50 can be provided in the SPU 60 which is connected to the input means 40. The SPU 60 is arranged to process the inputted audio signal, from the input means 40, to an alerting signal, and to store a digital representation of the alerting signal in memory means 100. The memory means 100, which is marked with "TUNE TABLE" in Fig. 3, can be e.g. an electrically erasable programmable read only memory (EEPROM). The advantage of using an EEPROM is that it allows a user to edit the alerting signal after being processed by the SPU 60, i.e. the digital representation of the alerting signal can be stored in a tune table. The tune table can be represented by reference frequencies of a certain bandwidth. The use of these reference frequencies is disclosed in more detail below. The digital representation of the alerting signal is recalled from the memory means 100 through a transducer 90, upon receiving an incoming call to the phone.

When processing the inputted audio signal, the SPU 60 is, in accordance with the present invention, provided with conversion means 70, which preferably is a digital signal processor (DSP). The conversion means 70 is arranged to convert the inputted audio signal into a digital representation of an alerting signal. The length of the inputted audio signal is divided into several parts, which is done either by means of the SPU 60, or before the signal is inputted into the SPU 60, where each part is represented by at least two frequencies. The division of the length of the audio signal can be done by sampling the audio signal, e.g. by means of the ADC 50. If the audio signal is divided into parts before its inputted into the SPU 60, which means that the signal is already in a digital format, the signal is represented by samples. When the audio signal is divided, i.e. sampled, the conversion means 70 selects one of the frequencies being most relevant within each part, in order to reproduce the alerting signal in a way similar to the audio signal. Preferably, the conversion means 70 chooses the strongest frequency, within each of the parts. It is also possible that the conversion means 70 chooses several frequencies, and even calculate an average value of the selected frequencies, i.e. weight the frequencies and chooses one frequency based on a statistical calculation. In order to choose the strongest frequency, the conversion means 70 can for example use a Fourier transform converter 80, which converts the audio signal by using a Fourier Transform. Preferably, the Fourier transform is a Fast Fourier Transform (FFT). Basically, the FFT transforms the divided signal from a time domain into a frequency domain, which makes it very easy to discover, i.e. analyse, which are the strongest frequencies, within each of the divided parts. The reason for it being so easy to measure the strength, is that the strength of the different frequencies is indicated by its energy, i.e. the energy is a function of the frequency. The energy indicates the amplitude for a frequency, and can be e.g. a root mean square (RMS) amplitude for a frequency, or some other statistical measure of the amplitude for a frequency, presented in relative values, e.g. in decibel. The FFT is a well known algorithm, which were first discussed in the middle of 1960. The original Fourier transform is descended from the beginning of 1820. Therefore, since the Fourier transform (or the FFT) is such a well known method, it will not be described in any further detail hereafter.

After the audio signal has been converted by the Fourier transformer converter 80, a decision is made on the frequencies which has the strongest energy, i.e. the strongest frequencies. This decision can, for example, be made in the "DECISION SW" 90, which can choose the strongest frequency within each part. Thus, the "DECISION SW" 90 reads each part of the converted signal, compares the strength of the different frequencies in each part, and decides which is the strongest frequency within each part. The "DECISION SW" 90 can for example be a software program, which is provided in the conversion means 70, and selects/decides which frequencies are the strongest.

After the frequency selection in the "DECISION SW" 90 of the different parts, an indication for each of the chosen frequencies, is stored in the memory means 100, wherein all indications for the several parts together forms a digital representation of an alerting signal. The indication of chosen frequency corresponds to a reference frequency as is provided in the "TUNE TABLE" 100. Thus, the frequencies in each part is also compared with some reference frequencies and chooses the reference frequency which is most similar to the frequencies in the compared part of the audio signal. This choice is the indication of the chosen frequency. The amount of reference frequencies should be selected in a way so that the bandwidth of the different frequencies is fine-tuned so an optimal balance between tracking range and tone separation is obtained. There should be at least two reference frequencies preferably 12. The number of reference frequencies can be selected by the user, by means of the user interface connected to the SPU. Also, there is a possibility to arrange a "SWITCH" 110 to the "DECISION SW" 90, which makes it possible for the user to listen to the alerting signal, before saving it in the memory means 100. The "SWITCH" 110 can e.g. be connected between the "DECISION SW" 90 and the memory means 100. Thus, if the user decides to save the generated alerting signal, he/she selects an option, e.g. displayed on the display of the phone, and store the digital representation of the alerting signal in the memory means 100. This option can be provided in the user interface, shown in Fig. 1 and 2, which means that that this option can be controlled by the control means shown in Fig. 2.

The Fourier transformation is done by a software, which can be provided into the Fourier transform converter 80. This transformation also, gives an opportunity for the programmer to specify what kind of sounds the input is expected to be. For example, if the sound is generated by the users mouth, which has a characteristic sound, it is possible to adopt an algorithm in the FFT converter 80. Some speech coders exploit models for speech production. Usually, the model describes the speech production from the perspective of a single person. In some application scenarios, such assumptions might be invalid due to extraneous/background signals and may result in degraded performance. One example is when there is background music, as from a radio or TV, which should also address background noises of various types in a speech processing algorithm (car noise, computer fan noise, jet engine noise).

One way of avoid unwanted noise is to add a noise spectrum in the memory means, and subtract a noise of which the spectrum is assumed from a speech signal in an algorithm provided in the FFT converter 80. The noise spectrum can be performed for various noise signals indicating various types of noises, and a plurality of representative noise spectra indicating the various types of noises are stored in the storing unit. In the algorithm, a plurality of speech signals which indicate a speech including a noise are input in series to the ADC 50, and a plurality of digital speech signals are obtained. Thereafter, a discrete Fourier transformation is performed in the Fourier transform converter 80, and a speech spectrum including an actual noise spectrum is obtained. Thereafter, one representative noise spectrum matching with the actual noise spectrum is read out from the memory means 100, and the representative noise spectrum read out is subtracted from the speech spectrum in a noise subtracting unit (not shown) to cancel the actual noise spectrum. Thereafter, a decision is made on the frequencies which has the strongest energy, i.e. the strongest frequencies, by means of the "DECISION SW" 90, as described above, and an alerting signal can finally be obtained.

### The method for creating an alerting signal.

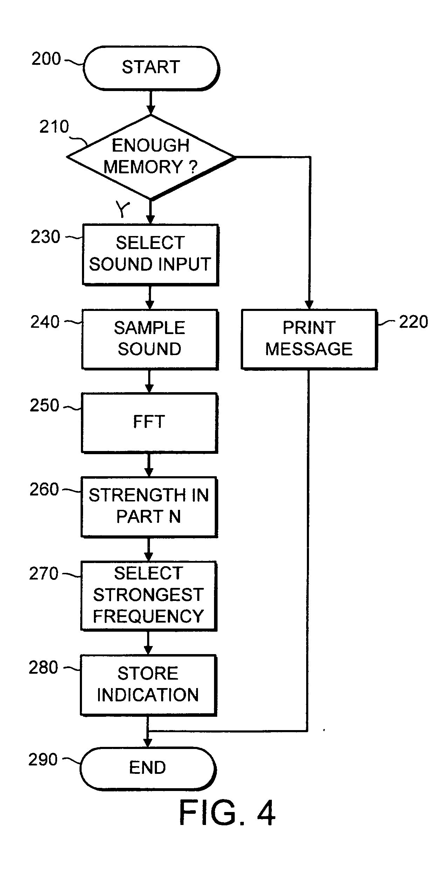

Referring to Fig. 4, which shows a flowchart over the method for creating an alerting signal in a telecommunication apparatus, in accordance with the present invention. The telecommunication apparatus is hereafter also referred to as a phone, and comprising input means, a transducer, memory means, and a signal processor unit (SPU), which is disclosed in detail with reference to Fig. 3.

When the phone is turned on "START" 200, the user may choose an option by means from a user interface, which enables the phone to receive an audio signal through input means. Then it might be possible that the phone detects if there is enough space in the memory means to store a digital representation of a new alerting signal, "ENOUGH MEMORY" 210. If the memory means does not have enough space to store a digital representation of a new alerting signal, the phone can print out a message on a display, "PRINT MESSAGE" 220, provided in the user interface, informing the user that there is not enough memory to store a digital representation of a new alerting signal. Then the method ends "END" and the user has to delete some information in the memory means, if he/she would still like to create a new alerting signal. Alternatively, the printed message could comprise another option for the user (not shown), allowing a possibility to overwrite another alerting signal, which means that the user does not have to start over again.

If the memory means has enough space to store a digital representation of a new alerting signal, the user can select different kinds of sound input "SELECT SOUND INPUT" 230. For example it can be possible to input the audio signal by a microphone, or via an electrical connector. The electrical connector enables the user to connect different kind of audio equipment to the phone. When the desired input means has been selected, the phone activates the input means, and receives the audio signal, which the user would like to create. The signal might be a digital or an analogue signal, depending on the input means. If the signal is analogue, the audio signal is sampled "SAMPLE SOUND" 240, e.g. by means of an ADC. This means that the length of the inputted audio signal is divided into several parts, where each part is represented by at least two frequencies.

When the signal is in a sampled format, the signal processing unit process the inputted audio signal by means of a Fourier transform converter, which converts the audio signal by using a Fourier transform. Preferably, the Fourier is a Fast Fourier Transform "FFT" 250.

After the Fourier transform, the frequency being most relevant for each divided part is selected, in order to reproduce the alerting signal in a way similar to the audio signal. Preferably, the most relevant frequency is the strongest frequency within each part being chosen. The selection can be done by reading each part of the divided signal, compare the strength of the different frequencies in each part "STRENGTH IN PART N" 260, and decide which frequency is the strongest within each part "SELECT STRONGEST FREQUENCY" 270. By strongest frequency means the frequency which has most energy within each part, after being Fourier transformed, which e.g. can be indicated by a RMS amplitude for a frequency.

When the selection has taken place, an indication for each chosen frequency is stored in the memory means, "STORE INDICATION" 280, wherein all indications for the several parts forms a digital representation of an alerting signal. The indication of chosen frequency corresponds to a reference frequency as is provided in the "TUNE TABLE" 100. Thus, the frequencies in each part are also compared with some reference frequencies and choose the reference frequency which is most similar to the frequencies in the compared part of the audio signal. This choice is the indication of the chosen frequency. The amount of reference frequencies should be selected in a way so that the bandwidth of the different frequencies is fine-tuned so an optimal balance between tracking range and tone separation is obtained. There should be at least two reference frequencies preferably 12. The number of reference frequencies can be selected by the user, by means of the user interface connected to the SPU. At this stage, the alerting signal is created, and can be used by the user, "END" 290.

### The user interface

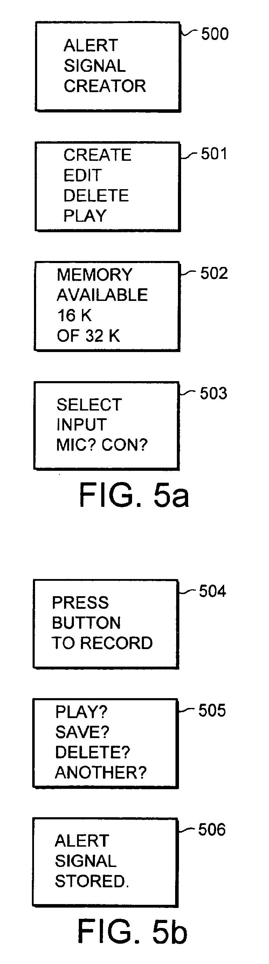

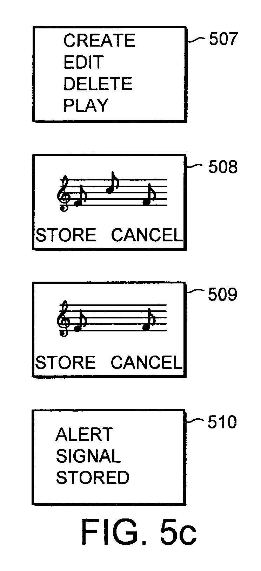

With reference to Fig. 5a, 5b and 5c, an example is shown on how the display of a user interface can act when arranged to an alerting system according to the present invention. Starting from Fig. 5a, there is a menu having the text "ALERT SIGNAL CREATOR" 500, which represent one menu among of a number of different menus. This menu is informing the user that it is possible to create alert signals by entering this menu. The user might use the navigation key 10 as shown in Fig. 1, in order to enter this menu.

When the user enters this menu, he/she might receive some options. For example, these options 501 can be to create a new alert signal, "CREATE", edit an existing alerting signal, "EDIT", delete an existing alerting signal, "DELETE", play an existing alerting signal, "PLAY", etc. The first option as indicated in the box having reference number 501 is "CREATE", which is marked with grey, indicating the selection of the option. Upon entering this menu 501, the selection of this create option can be pre-selected, in order to facilitate the use of this feature. Thus, by pre-selecting an option, which seems to be the most frequent used option, it will facilitate the user when he/she is going to create a new alerting signal, by using only one key, e.g. the navigation key 10 as shown in Figure 1.

If the user selects "CREATE", there might be an indication of space available in the phones memory, "MEMORY AVAILABLE 16 K OF 32 K" 502. If the space in the memory is enough to save another alerting signal, or one or more of the alerting signals can be deleted, the user might choose an input of an audio signal, "SELECT INPUT, MIC?, CON?" 503, wherein this embodiment allows the user to choose two different types of inputs. The inputs in this embodiment refers to a microphone and an electrical connector. The electrical connector can be connected to a suitable connector, and receive an audio signal from e.g. compact disc (CD) player, tape recorder, radio, or other audio equipment which produces an audible signal.

Thereafter, with reference to Fig. 5b, when the user has chosen an input and is ready to create/record a new alert signal, he/she receives a message "PRESS BUTTON TO RECORD" 504. To proceed, the user can for example press the navigation key 10 as shown in Fig. 1, and the creation/recording starts. Preferably, there is a limit for defining how long a recording can be.

When the user has finished the creation/recording of the new alerting signal, he/she might receive a new list of options 505. For example, these new options 505 can be to listen to the result, "PLAY", save the new alerting signal, "SAVE", delete the new alerting signal, "DELETE", create another alerting signal, "ANOTHER", etc. The first option as indicated in the box having reference number 505 is "PLAY", which is marked with gray, indicating the selection of the option. Upon entering this menu 505, the selection of this play option can be pre-selected, in order to facilitate the use of this feature.

If the user is satisfied with the new alerting signal(s), it is possible to store the alerting signal(s). As a confirmation that the alerting signal(s) has been stored, a message may appear, "ALERT SIGNAL STORED" 507.

With reference to Fig. 5c, the menu as is 507 showing the same options as in Fig. 5a with reference number 501. The second option as indicated in the box having reference number 507 is "EDIT", which is marked with gray, indicating the selection of the option. Upon entering this option "EDIT", the user may edit an existing alerting signal. The alerting signal can be selected from a list of several alerting signals not shown and when the user has selected an alerting signal it is possible to edit the signal. The edit window 508 shows a simple example of an alerting signal. The user may delete tones, add tones and/or scroll the display sideways. In the following edit window 509, one tone has been deleted. Finally, the user can choose to either "STORE" or to "CANCEL" the edit of the alerting signal. If the user chooses the store option in 508, 509, an indication of this action can be shown as a message 510 "ALERT SIGNAL STORED". If the user chooses the cancel option in 508, 509, nothing will happen to the alerting signal.

The invention is not limited to the above described and in the drawings shown examples of an embodiment but can be varied within the scope of the appended claims. For example, the input means, can be provided with infra read (IR) means and/or with radio frequency (RF) means, in order to receive an audio signal comprised in an IR signal and/or an RF signal. Also, even if the embodiments above refers to a phone, the invention could be implemented in a pager or a similar telecommunication apparatus.

## Claims

1. A telecommunication apparatus (1) having an alerting system (30), comprising:
• input means (6,40), arranged to receive an input of an audio signal, said audio signal having a length of time comprising different frequencies of various strength,
• transducer (90), arranged to generate an alerting signal when the apparatus (1) receives an incoming call from a calling party,
• memory means (100), arranged to store and recall a digital representation of the alerting signal to be generated by said transducer (90), and
• a signal processing unit (60), operatively associated with said input means (6,40), said transducer (90), and said memory means (100),
wherein said signal processing unit (60) is arranged to process the inputted audio signal, from the input means (6,40), into an alerting signal, and store a digital representation of the alerting signal in said memory means (100), in order to recall said alerting signal through said transducer (90) upon receiving an incoming call,
**characterised in that** said signal processing unit (60) is provided with conversion means (70), which is arranged to convert the inputted audio signal into a digital representation of an alerting signal and to transform a digital signal from a time domain to a frequency domain, wherein the length of said inputted audio signal is divided into several parts either by means of the signal processing unit (60) or before said signal being inputted into the signal processing unit, where each part is represented by at least two frequencies and is transformed from the time domain to the frequency domain, and the conversion means (70) is further arranged to select one of the frequencies within each part having the highest energy in the frequency domain, in order to reproduce the alerting signal in a way similar to the audio signal, and store an indication for each chosen frequency in the memory means (100), wherein all indications for the several parts forms a digital representation of an alerting signal.

2. A telecommunication apparatus according to claim 1, **characterised in that** the conversion means (70) is arranged to choose the strongest frequency, within each of the parts, wherein the strongest frequency represents the most relevant frequency.

3. A telecommunication apparatus (1) according to claim 1, **characterised in that** said input means (40) is provided with connecting means, which is arranged to receive an electrical connector from an apparatus having an audio output.

4. A telecommunication apparatus (1) according to claim 1, **characterised in that** said conversion means (70) comprising a Fourier Transform converter (80), which converts said audio signal by using a Fourier Transform, allowing the conversion means (70) to choose the frequency in each part having the highest energy.

5. A telecommunication apparatus (1) according to claim 1, **characterised in that** said conversion means (70) is further arranged to compare the frequencies in each part with at least two reference frequencies, and choose the reference frequency, which is most similar to the frequencies in the compared part of the audio signal, which being the indication of the chosen frequency.

6. A telecommunication apparatus (1) according to claim 5, **characterised in that** said memory means (100) being provided with a tune table, representing the reference frequencies.

7. A telecommunication apparatus (1) according to claims 5, **characterised in that** said signal processing unit (60) is arranged to a user interface (2,3,4,5,6), allowing a user to set a number of reference frequencies.

8. A telecommunication apparatus (1) according to claims 1, **characterised in that** said telecommunication apparatus (1) is a cellular phone.

9. A method for creating an alerting signal for a telecommunication apparatus (1), said apparatus (1) comprising input means (6,40), a transducer (90), memory means (100), and a signal processor unit (60), wherein said method comprising the following steps:
• the input means (6,40) receives an input of an audio signal, said audio signal having a length of time comprising different frequencies of various strength,
• said signal processing unit (60) converts the inputted audio signal, from the input means (6,40), to an alerting signal, and
• said signal processing unit (60) store a digital representation of said alerting signal in said memory means (100), in order to recall said alerting signal through said transducer (90) upon receiving an incoming call,
**characterised in that** said signal processing unit (60) converts the inputted audio signal into a digital representation of an alerting signal by dividing the length of the audio signal into several parts, or by receiving the parts directly in the signal processing unit (60) and transforms a digital signal from a time domain to a frequency domain, where each part is represented by at least two frequencies and is transformed from the time domain to the frequency domain, select one of the frequencies within each part having the highest energy in the frequency domain, in order to reproduce the alerting signal in a way similar to the audio signal, and store an indication for each chosen frequency in the memory means (100), wherein all indications for the several parts forms a digital representation of an alerting signal.

10. A method according to claim 9, **characterised in that** said signal processing unit (60) choose the strongest frequency, within each of the parts, wherein the strongest frequency represents the most relevant frequency.

11. A method according to claim 9, **characterised in that** said audio signal being inputted to the input means (40) via connecting means, receiving an electrical connector from an apparatus inputting said audio signal.

12. A method according to claim 9, ***characterised in* that** said signal processing unit (60) converts said audio signal by using a Fourier Transform, and chooses the frequency in each part having the highest energy.

13. A method according to claim 9, **characterised in that** said signal processing unit (60) compares the frequencies in each part with at least two reference frequencies, and chooses the reference frequency, which is most similar to the frequencies in the compared part of the audio signal, which being the indication of the chosen frequency.

14. A method according to claim 13, **characterised in that** said indications is stored in a tune table in the memory means (100), wherein the tune table represents the reference frequencies.

15. A method according to claim 13, **characterised in that** a user selects the number of reference frequencies, by using a user interface (2,3,4,5,6) connected to said signal processing unit (60).

## Patentansprüche

1. Telekommunikations-Vorrichtung (1), die ein Alarmierungssystem (30) aufweist, umfassend:
• Eingabemittel (6,40), die eingerichtet sind, eine Eingabe eines Audiosignals zu empfangen, wobei das Audiosignal eine Zeitdauer aufweist, die unterschiedliche Frequenzen in verschiedenen Stärken umfasst,
• Signalgeber (90), der eingerichtet ist, ein Alarmierungssignal zu erzeugen, wenn die Vorrichtung (1) einen eingehenden Anruf von einem anrufenden Beteiligten empfängt,
• Speichermittel (100), die eingerichtet sind, eine digitale Darstellung des durch den Signalgeber (90) zu erzeugenden Alannierungssignals zu speichern und abzurufen, und
• eine Signalverarbeitungseinheit (60), die mit den Eingabemitteln (6,40), dem Signalgeber (90), und den Speichermittel (100) betriebsfähig verknüpft ist,
wobei die Signalverarbeitungseinheit (60) eingerichtet ist, das von den Eingabemitteln (6,40) eingegebene Audiosignal in ein Alannierungssignal zu verarbeiten, und eine digitale Darstellung des Alarmierungssignals in den Speichermitteln (100) zu speichern, um das Alarmierungssignal durch den Signalgeber (90) nach dem Empfangen eines eingehenden Anrufs abzurufen,
**dadurch gekennzeichnet, dass** die Signalverarbeitungseinheit (60) mit Konvertierungsmittem (70) versehen ist, die eingerichtet sind, das eingegebene Audiosignal in eine digitale Darstellung eines Alarmienmgssignalls zu konvertieren und ein digitales Signal von einem Zeitbereich in einen Frequenzbereich umzuwandeln, wobei die Dauer des eingegebenen Audiosignals entweder mittels der Signalverarbeitungseinheit (60) oder bevor das Signal in die Signalverarbeitungseinheit eingegeben wird, in mehrere Teile geteilt wird, wobei jeder Teil durch mindestens zwei Frequenzen dargestellt wird und von dem Zeitbereich in den Frequenzbereich umgewandelt wird, und das Konvertierungsnnittel (70) weiter eingerichtet ist, eine der Frequenzen auszuwählen, in denen jeder Teil die höchste Energie in dem Frequenzbereich aufweist, um das Alannierungssignal auf ähnliche Weise wie das Audiosignal wiederzugeben, und eine Angabe für jede gewählte Frequenz in den Speichermitteln (100) zu speichern, wobei alle Angaben für die mehrere Teile eine digitale Darstellung eines Alarmierungssignals bilden.

2. Telekommunikations-Vorrichtung gemäß Anspruch 1, **dadurch gekennzeichnet, dass** das Konvertierungsmittel (70) eingerichtet ist, die stärkste Frequenz innerhalb jedem der Teile zu wählen, wobei die stärkste Frequenz die relevantestfi Frequenz darstellt.

3. Telekommunikations-Vorrichtung (1) gemäß Anspruch 1, **dadurch gekennzeichnet, dass** das Eingabemittel (40) mit einem Verbindungsmitteln versehen ist, das eingerichtet ist, einen elektrischen Stecker von einer Vorrichtung, die eine Audioausgang aufweist, zu empfangen.

4. Telekommunikations-vorrichtung (1) gemäß Anspruch 1, **dadurch gekennzeichnet, dass** das Konvertierungsmitteln (70) einen Fourier-Transformations-Konverter (80) umfasst, der das Audiosignal unter Verwendung einer Fourier-Transformation konvertiert, wobei dem Konvertierungsmittel (70) ermöglicht wird, die Frequenz in jedem Teil zu wählen, die die höchste Energie aufweist.

5. Telekommunikations-Vorrichtung (1) gemäß Anspruch 1, **dadurch gekennzeichnet, dass** das Konverticrungsrnittel (70) weiter eingerichtet ist, die Frequenzen in jedem Teil mit mindestens zwei Referanzfrequenzen zu vergleichen, und die Referenzfrequenz zu wählen, die den Frequenzen in dem verglichenen Teil des Audiosignals am ähnlichsten ist, die die Angabe der gewählten Frequenz ist.

6. Telekommunikations-Vorrichtung (1) gemäß Anspruch 5, **dadurch gekennzeichnet, dass** die Speichermitteln (100) mit einer Melodientabelle ausgestattet sind, die die Referenzfrequenzen darstellt.

7. Telekommunikations-Vorrichtung (1) gemäß Anspruch 5, **dadurch gekennzeichnet, dass** die Signalverarbeitungseinheit (60) mit einer Benutzeroberfläche (2, 3, 4, 5, 6) eingerichtet ist, die dem Benutzer ermöglicht, eine Anzahl von Referenzfrequenzen einzustellen.

8. Telekommunikations-Vorrichtung (1) gemäß Anspruch 1, **dadurch gekennzeichnet, dass** die Telekommunikations-Vorriclitung (1) ein Mobiltelefon ist.

9. Verfahren zum Erstellen eines Alarmierungssignals für eine Telekommunikations-Vorrichtung (1), wobei die Vorrichtung (1) Eingabemittel (6,40), einen Signalgeber (90), Speichermittel (100), und eine Signalverarbeitungseinheit (60) umfasst, wobei das Verfahren folgende Schritte umfasst:
• die Eingabemittel (6,40) empfangen eine Eingabe eines Audiosignals, wobei das Audiosignal eine Zeitdauer aufweist, die unterschiedliche Frequenzen in verschiedenen Stärken umfasst,
• die Signalverarbeitungseinheit (60) konvertiert das von den Eingabemitteln (6,40) eingegebene Audiosignal zu einem Alarmierungssigrtal, und
• die Signalverarbeitungseinheit (60) speichert eine digitale Darstellung des Alarmienlngssignat in den Speichermittel (100), um das Alarmierungssignal durch den Signalgeber (90) nach dem Empfangen eines eingehenden Anmfs abzurufen,
**dadurch gekennzeichnet, dass** die Signalverarbeitungseinheit (60) das eingegebene Audiosignal in eine digitale Darstellung eines Alarmierungssignal durch Teilen der Dauer des Audiosignals in mehrere Teile, oder durch Empfangen der Teile direkt in der Signalverarbeitungseinheit (60) konvertiert und ein digitales Signal von einem Zeitbereich in einen Frequenzbereich umwandelt, wobei jeder Teil durch mindestens zwei Frequenzen dargestellt wird und von dem Zeitbereich in den Frequenzbereich umgewandelt wird, eine der Frequenzen innerhalb jedes Teils ausgewählt, die die höchste Energie in dem Frequenzbereich aufweist, um das Alarm.ierungssignal auf ähnliche Weise wie das Audiosignal wiederzugeben, und eine Angabe für jede gewählte Frequenz in den Speichermitteln (100) speichert, wobei alle Angaben für die rnelueren'i'eile eine digitale Darstellung eines Alarmierungssignals bilden.

10. Vorrichtung gemäß Anspruch 9, **dadurch gekennzeichnet, dass** die Signalverarbeitungseinheit (60) die stärkste Frequenz innerhalb jedem der Teile wählt, wobei die stärkste Frequenz die relevanteste Frequenz darstellt.

11. Vorrichtung gemäß Anspruch 9, **dadurch gekennzeichnet, dass** das Audiosignal an die Eingabemittel (40) über Verbindungsmitteln eingegeben wird, wobei ein elektrischen Stecker von einer Vorrichtung, die das Audiosignal eingibt, empfangen wird.

12. Vorrichtung gemäß Anspruch 9, **dadurch gekennzeichnet, dass** die Signalverarbeitungseinheit (60) das Audiosignal unter Verwendung einer Fourier-Transformation konvertiert und die Frequenz in jedem Teil wählt, die die höchste Energie aufweist.

13. Vorrichtung gemäß Anspruch 9, **dadurch gekennzeichnet, dass** die Signalverarbeitungseinheit (60) die Frequenzen in jedem Teil mit mindestens zwei Referenzfrequenzen vergleicht und die Referenzfrequenz wählt, die am ähnlichsten der Frequenzen in dem verglichenen Teil des Audiosignals ist, die die Angabe der gewählten Frequenz ist.

14. Vorrichtung gemäß Anspruch 13, **dadurch gekennzeichnet, dass** die Angaben in einer Melodientabelle in den Speichermitteln (100) gespeichert werden, wobei die Melodientabelle die Referenzfrequenzen darstellt.

15. Verfahren gemäß Anspruch 13, **dadurch gekennzeichnet, dass** ein Benutzer die Anzahl von Referenzfrequenzen durch Verwendung einer Benutzeroberfläche (2, 3, 4, 5, 6) auswählt, die mit der Signalverarbeitungseinheit (60) verbunden ist.

## Revendications

1. Appareil de télécommunication (1) comportant un système d'alerte (30) comprenant ;
• un moyen d'entrée (6, 40) agencé pour recevoir une entrée d'un signal audio, ledit signal audio ayant une durée comprenant différentes fréquences de diverses intensités,
• un transducteur (90) agencé pour générer un signal d'alerte lorsque l'appareil (1) reçoit un appel entrant d'un appelant,
• un moyen de mémoire (100) agencé pour stocker et rappeler une représentation numérique du signal d'alerte à générer par ledit transducteur (90), et
• une unité de traitement de signal (60), associée de manière opérationnelle avec ledit moyen d'entrée (6, 40), ledit transducteur (90) et ledit moyen de mémoire (100),
dans lequel ladite unité de traitement de signal (60) est agencée pour traiter le signal audio entré, provenant du moyen d'entrée (6, 40), en un signal d'alerte, et stocker une représentation numérique du signal d'alerte dans ledit moyen de mémoire (100), afin de rappeler ledit signal d'alerte par l'intermédiaire dudit transducteur (90) lors de la réception d'un appel entrant,
**caractérisé en ce que** ladite unité de traitement de signal (60) est pourvue d'un moyen de conversion (70), qui est agencé pour convertir le signal audio entré en une représentation numérique d'un signal d'alerte et pour transformer un signal numérique d'un domaine de temps à un domaine de fréquence, dans lequel la longueur dudit signal audio entré est divisée en plusieurs parties soit au moyen de l'unité de traitement de signal (60) soit avant que ledit signal soit entré dans l'unité de traitement de signal, où chaque partie est représentée par au moins deux fréquences et est transformée du domaine de temps au domaine de fréquence, et le moyen de conversion (70) est agencé en outre pour sélectionner l'une des fréquences au sein de chaque partie ayant la plus haute énergie dans le domaine de fréquence, afin de reproduire le signal d'alerte d'une manière similaire au signal audio, et de stocker une indication pour chaque fréquence choisie dans le moyen de mémoire (100), dans lequel toutes les indications pour les plusieurs parties forme une représentation numérique d'un signal d'alerte.

2. Appareil de télécommunication selon la revendication 1, **caractérisé en ce que** le moyen de conversion (70) est agencé pour choisir la plus forte fréquence, au sein de chacune des parties, dans lequel la plus forte fréquence représente la fréquence la plus pertinente.

3. Appareil de télécommunication (1) selon la revendication 1, **caractérisé en ce que** ledit moyen d'entrée (40) est pourvu d'un moyen de connexion, qui est agencé pour recevoir un connecteur électrique à partir d'un appareil ayant une sortie audio.

4. Appareil de télécommunication (1) selon la revendication 1, **caractérisé en ce que** ledit moyen de conversion (70) comprend un convertisseur à transformée de Fourier (80) qui convertit ledit signal audio en utilisant une transformée de Fourier, permettant au moyen de conversion (70) de choisir la fréquence dans chaque partie ayant la plus haute énergie.

5. Appareil de télécommunication (1) selon la revendication 1, **caractérisé en ce que** ledit moyen de conversion (70) est agencé en outre pour comparer les fréquences dans chaque partie avec au moins deux fréquences de référence, et pour choisir la fréquence de référence, qui est la plus similaire aux fréquences dans la partie comparée du signal audio, qui est l'indication de la fréquence choisie.

6. Appareil de télécommunication (1) selon la revendication 5, **caractérisé en ce que** ledit moyen de mémoire (100) est pourvu d'une table de syntonisation, représentant les fréquences de référence.

7. Appareil de télécommunication (1) selon la revendication 5, **caractérisé en ce que** ladite unité de traitement de signal (60) est agencée sur une interface utilisateur (2, 3, 4, 5, 6) permettant à un utilisateur d'établir un certain nombre de fréquences de référence.

8. Appareil de télécommunication (1) selon la revendication 1, **caractérisé en ce que** ledit appareil de télécommunication (1) est un téléphone cellulaire.

9. Procédé de création d'un signal d'alerte pour un appareil de télécommunication (1), ledit appareil (1) comprenant un moyen d'entrée (6, 40), un transducteur (90), un moyen de mémoire (100) et une unité de traitement de signal (60), dans lequel ledit procédé comprend les étapes suivantes :
• le moyen d'entrée (6, 40) reçoit une entrée d'un signal audio, ledit signal audio ayant une durée comprenant différentes fréquences de diverses intensités,
• ladite unité de traitement de signal (60) convertit le signal audio entré, provenant du moyen d'entrée (6, 40), en un signal d'alerte, et
• ladite unité de traitement de signal (60) stocke une représentation numérique dudit signal d'alerte dans ledit moyen de mémoire (100), afin de rappeler ledit signal d'alerte par l'intermédiaire dudit transducteur (90) lors de la réception d'un appel entrant,
**caractérisé en ce que** ladite unité de traitement de signal (60) convertit le signal audio entré en une représentation numérique d'un signal d'alerte en divisant la longueur du signal audio en plusieurs parties, ou en recevant les parties directement dans l'unité de traitement de signal (60) et transforme un signal numérique d'un domaine de temps à un domaine de fréquence, où chaque partie est représentée par au moins deux fréquences et est transformé du domaine de temps au domaine de fréquence, sélectionne l'une des fréquences au sein de chaque partie ayant la plus haute énergie dans le domaine de fréquence, afin de reproduire le signal d'alerte d'une manière similaire au signal audio, et stocke ne indication pour chaque fréquence choisie dans le moyen de mémoire (100), dans lequel toutes les indications pour les plusieurs parties forme une représentation numérique d'un signal d' alerte.

10. Procédé selon la revendication 9, **caractérisé en ce que** ladite unité de traitement de signal (60) choisit la plus forte fréquence, au sein de chacune des parties, dans lequel la plus fort fréquence représente la fréquence la plus pertinente.

11. Procédé selon la revendication 9, **caractérise en ce que** ledit signal audio entré sur le moyen d'entrée (40) via un moyen de connexion reçoit un connecteur électrique à partir d'un appareil entrant ledit signal audio.

12. Procédé selon la revendication 9 **caractérisé en ce que** ladite unité de traitement de signal (60) convertit ledit signal audio en utilisant une transformée de Fourier, et choisit la fréquence dans chaque partie ayant la plus haute énergie.

13. Procédé selon la revendication 9, **caractérisé en ce que** ladite unité de traitement de signal (60) comp les fréquences dans chaque partie avec au moins deux fréquences de référ nce, et choisit la fréquence de référence, qui est la plus similaire aux fréquences dans la partie comparée du signal audio, qui est l'indication de la fréquence choisie.

14. Procédé selon la revendi atio 13, **caractérisé en ce que** lesdites indications sont stockées dans e table de syntonisation dans le moyen de mémoire (100), dans lequel la t ble e syntonisation représente les fréquences de référence.

15. Procédé selon la revendication 13, **caractérisé en ce qu'**un utilisateur sélectionne le nombre des fréquences de référence, en utilisant une interface utilisateur (2, 3, 4, 5, 6) connectée à ladite unité de traitement de signal (60).
